# EUROPEAN PATENT SPECIFICATION

(11) **EP 3 164 540 B1**
(45) Date of publication and mention of the grant of the patent: **09.03.2022**
(21) Application number: 15733729.6
(22) Date of filing: 01.07.2015
(51) Int. Cl.: D21F 9/00, D21G 9/00

(54) **ADJUSTABLE DEVICE FOR RECOVERING ENERGY FROM STOCK MOMENTUM**
EINSTELLBARE VORRICHTUNG ZUR ENERGIERÜCKGEWINNUNG AUS BESTANDSDYNAMIK
DISPOSITIF RÉGLABLE DE RÉCUPÉRATION D'ÉNERGIE À PARTIR D'UNE IMPULSION DE PAPIER

(30) Priority: 01.07.2014 SE 1450812
(43) Date of publication of application: 10.05.2017
(73) Proprietor: Valmet Aktiebolag, 851 94 Sundsvall (SE)
(72) Inventor: GUSTAVSSON, Tord, 664 95 Borgvik (SE); PÅLSSON, Stefan, 653 51 Karlstad (SE); JOHANSSON, Arvid, 653 49 Karlstad (SE); VIDEGREN, Leif, 652 17 Karlstad (SE); ENGQVIST, Elin, 654 62 Karlstad (SE)
(74) Representative: Novagraaf Group
(86) International application number: PCT/EP2015/065025
(87) International publication number: WO 2016/001322

(56) References cited:
- WO-A1-01/44564
- WO-A1-2008/029427

## Description

### BACKGROUND

### 1. Technical Field

The present invention relates generally to recovering energy used during the fabrication of paper products.

### 2. Description of Related Art

Paper, tissue, board, and other cellulose-based products are often fabricated from a suspension (e*.g.,* of cellulose in water, hereinafter: stock). A headbox may inject stock between a loop of forming wire (*e.g.,* a porous wire mesh or cloth) driven around a lead roll, and a loop of fabric (*e.g.,* a felt or another forming wire), which is typically driven around a forming roll. Forces applied to the stock (*e.g.,* via the headbox, the forming wire, the fabric, or the rolls) cause the water to pass through the forming wire to form a web of cellulose between the forming wire and fabric.

Large amounts of high-velocity water are ejected from the stock as it passes through the forming wire. Recovery of energy from this stock may improve the efficiency of papermaking. US patent no. 6,398,913 describes an arrangement and method for recovery of energy in a paper machine forming section, in which kinetic energy imparted to the stock is recovered via a turbine. However, such prior energy recovery apparatus are not easily adaptable to some paper-making processes (*e.g*., different headbox positions, headbox geometries, roll diameters, and the like), stock compositions, stock volumes, fabric velocities, and the like. As such, these systems may suffer from suboptimal energy recovery efficiency. Adaptability to different flow conditions and papermaking apparatus may improve the efficiency of papermaking.

Many designs that appear feasible "on paper" may not work as desired when actually implemented at full scale in the real world. Deformation due to gravity may displace a component, such that a desired position "on paper" is not the actual position of the component in the real world. Jet forces may deform a component. For example, a plate may have one shape before the impinging water jet is turned on, yet have a different shape when deformed by the water jet.

### SUMMARY OF THE INVENTION

Kinetic energy imparted to stock during papermaking may be recovered using an apparatus for recovering energy comprising a turbine (*e.g.,* a Banki turbine). As water is ejected through the forming wire, it may be guided to a turbine using a guide plate. An adjustable guide plate and/or an adjustable turbine position may enable an alignment of the apparatus with respect to the papermaking equipment. Proper alignment may increase an amount of energy recovered from the ejected stock, reducing the net energy consumption of the papermaking process. Some embodiments comprise a modular system (*e.g*., having a turbine module and a guide plate module), which may facilitate mounting, alignment, and/or maintenance of an apparatus.

Various aspects provide for an apparatus for recovering energy from a forming section of a papermaking machine. The papermaking machine may comprise a forming wire loop driven around a lead roll, a fabric loop driven around a forming roll, and a headbox configured to inject a stock into a moving sandwich created by the forming wire and fabric or fabric loops. The apparatus may comprise a turbine coupled to a generator, and a curved guide plate shaped to direct water ejected through the forming wire into the turbine. The guide plate may terminate in a terminal edge proximate the turbine. An actuator may be coupled to the guide plate, and a pivot may be coupled to the guide plate.

The actuator and pivot may be operable to adjust at least one of a position of the terminal edge with respect to the turbine and an angle of the guide plate (*e.g.,* of a terminal surface of the guide plate proximate the turbine) with respect to the turbine. Alignment may increase the efficiency of momentum transfer from the ejected water stream to the turbine. The actuator and pivot may operate to position the guide plate in a bypass position, wherein water "passes by" the turbine without spinning the turbine. Such a configuration may be used to provide for continued operation of the papermaking machine during turbine adjustments or maintenance.

In some cases, an apparatus for recovering energy from a papermaking machine may comprise a turbine module comprising a turbine coupled to a generator, and a guide plate module comprising a curved guide plate shaped to direct water ejected from the stock through the forming wire into the turbine. The guide plate module may be separable from the turbine module to facilitate removal and replacement of the guide plate module without changing the alignment of the guide plate with respect to the turbine. In some cases, the guide plate module and turbine module are coupled by a module mount. A module mount may provide for a removable attachment of one module to the other module, enabling adjustability (*e.g*., in one or more directions) between the guide plate module and turbine module.

A method for aligning an energy recovery apparatus and a papermaking machine may comprise providing an apparatus for recovering energy from a papermaking machine, operating the papermaking machine, adjusting the guide plate and/or turbine, and affixing the guide plate and/or turbine a position at which an amount of electricity generated by the generator at a given volume of head stock injection is a maximum. The guide plate and/or turbine may be affixed in a position that maximizes an efficiency of the papermaking process (*e.g.*, maximizes the ratio of power generated by the turbine to power imparted to the stock (*e.g.,* via the headbox, lead roll, forming roll, and the like)).

In some embodiments, a papermaking machine may comprise a forming section (*e.g.,* a headbox, forming roll, lead rolls, forming wire, and fabric) and an apparatus to recover energy from stock injected by the headbox.

Prior to actual use, a difference between an embodiment and another device may not be apparent without the benefit of modern, computer aided design and modeling tools. A person of ordinary skill uses such tools extensively (typically exclusively) for design (e.g., Solidworks, Pro-E, Catia, Autocad, and the like). The behavior of a design (and that of changes to the design) may be predicted using computer use modeling tools (e.g., the finite element method, FEM) that impart representative loads to a structure and calculate the effect of these loads on the structure. Such models may predict the behavior of an apparatus during use.

For large, expensive, complicated apparatus, particularly those undergoing complex reactions with the environment (e.g., a car crashing into a barrier) computer modeling may be the only way to identify a desired design prior to its manufacture and startup (at which point, the ramifications of a poor design might be destructive). Various embodiments described herein require the use of computer-aided tools to compare them to other devices (in the prior art or afterwards). The use of such tools (e.g., CAD, FEM) is within the capabilities of a person of ordinary skill. Exemplary commercial packages include ANSYS, Abaqus, NASTRAN, COMSOL, and LS Dyna.

### BRIEF DESCRIPTION OF THE DRAWINGS

FIG. 1 illustrates an implementation of an energy recovery apparatus, according to some embodiments.
FIG. 2 illustrates an energy recovery apparatus, according to some embodiments.
FIG. 3 illustrates a turbine mount, according to some embodiments.
FIG. 4 illustrates an exemplary alignment of a guide plate, according to some embodiments.
FIG. 5 illustrates representative experimental results from a first machine, according to some embodiments.
FIGS. 6A and 6B compare two guide plate positions and their associated effect on power conversion efficiency for another machine, according to an embodiment.
FIG. 7 illustrates a preferred region of a forming section within which a guide plate pivot point may be located, according to some embodiments.
FIG. 8 illustrates a guide plate according to an embodiment, with several representative identification lines used to demarcate deformation during FEM simulations.
FIG. 9A illustrates the coordinate systems used to report the modeled behavior of the lines shown in FIG. 8, according to an embodiment.
FIG. 9B is a plot of modeled deformation (generated using ANSYS) of guide plate 850, under both gravity loading and jet force loading (from velocity and volume of impinging water of an actual paper machine in actual operating conditions) according to an embodiment.
FIG. 10 illustrates a predicted deformation due to jet loading by impinging water, according to some embodiments.
FIGS. 11A and 11B illustrate modeled deformation of a guide plate, according to some embodiments, in this example using ANSYS.
FIG. 12 illustrates a representative distance between a guide plate and a turbine, according to some embodiments.

### DETAILED DESCRIPTION OF THE INVENTION

Systems and methods described herein may enable the recovery of energy during papermaking. Kinetic energy imparted to stock during papermaking may be recovered with a turbine coupled to a generator. As water is ejected through the forming wire, it may be guided to the turbine using a guide plate. To maximize the energy recovered by the turbine, an adjustable guide plate and/or an adjustable turbine position may be provided. An adjustable guide plate may accommodate differences in head box exit size, head box position, head box angle, forming wire velocity, stock volume, stock composition, stock velocity, and the like. By adjusting the guide plate in a manner that maximizes the transfer of momentum from the stock to the turbine, the efficiency of energy recovery may be improved. Maximization of energy recovery may require positioning the guide plate with a very high accuracy and/or precision (e.g., to within a few mm, or even within 1mm, and to an angular precision of better than 0.5 degrees).

An adjustable turbine position may accommodate different size forming rolls and fabric/wire velocities, such that the turbine may be positioned an optimal distance (*e.g.*, radially) from the forming roll and from the headbox (*e.g*., angularly). Some embodiments comprise a guide plate module and a turbine module, removably attached in a modular fashion, such that the guide plate module may be demounted from the turbine module and/or adjusted (*e.g.,* laterally, vertically) with respect to the turbine module.

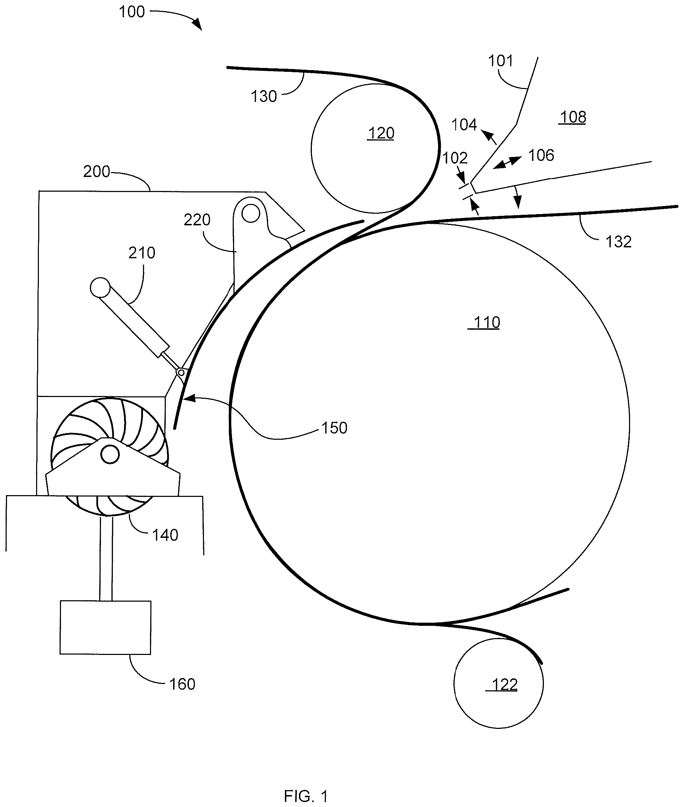

FIG. 1 illustrates an implementation of an energy recovery apparatus, according to some embodiments. FIG. 1 illustrates a forming section of a papermaking machine 100 having an energy recovery apparatus 200. For the purposes of this specification, papermaking machine 100 may also be a machine for fabricating tissue, board, and/or other products fabricated by the extraction of a liquid (*e.g.,* water) from a suspension of particles (*e.g.,* cellullose) dispersed in the liquid.

Exemplary papermaking machine 100 may include a headbox 101 configured to receive and inject stock 108. A forming roll 110 may guide a forming fabric, described herein as fabric 132. Some forming rolls have a diameter between 500 and 2500 mm, including between 700 and 2000 mm, including between 1000 and 1900 mm, including about 1200 to 1850 mm. A lead roll 120 may guide a forming wire 130. Forming wire 130 and fabric 132 are typically disposed as loops, coming together to form a continuous "sandwich" of moving loops of forming wire 130 and fabric 132, into which headbox 101 injects stock 108. As the sandwich moves around forming roll 110, water is ejected from the sandwiched stock, leaving a cellulose web between the forming wire 130 and fabric 132. The sandwich may be separated at lead roll 122, after which the web of dewatered stock may be further processed.

In some embodiments, an energy recovery apparatus 200 includes a turbine 140 and an adjustable guide plate 150. Guide plate 150 guides water (ejected through forming wire 130) into turbine 140. Turbine 140 may be coupled to a generator 160, which generates electricity.

An energy recovery apparatus may include one or more of an adjustable guide plate, an adjustable turbine, and a modular system in which a guide plate is implemented as part of a guide plate module, a turbine is implemented as part of a turbine module, and the guide plate module is removably attached to the turbine module. Some embodiments combine several of these features; some embodiments include only one of these features. Exemplary illustrations shown herein are for illustrative purposes. In illustrative FIG. 1, guide plate 150 may be adjusted by an actuator 210 configured to actuate guide plate 150 and a pivot 220.

Guide plate 150 may be stiff (*e.g.*, substantially rigid). Guide plate 150 may be flexible. A guide plate may be designed to be as stiff as possible, yet still deform slightly (e.g., due to gravity and water jet loading). In some aspects, a deviation from a desired shape and position is estimated using finite element modeling, and the guide plate is adjusted to accommodate this deviation, such that the guide plate is properly aligned when the machine is running (and the guide plate is being "pushed" by the water jet). In some embodiments, guide plate 150 is flexible enough to be deformed slightly by various components of the apparatus, but stiff enough to not be substantially deformed by the sprayed water ejected from the forming roll. In some cases, a guide surface is flexible enough that the ejected water deflects the guide surface to form a shape that is at least partially controlled by the momentum of the water impinging on the guide plate. In an embodiment, the actuator and pivot are configurable to change a curvature of the guide plate, particularly wherein the actuator and pivot are operable to preload the guideplate against (to resist) a force imparted by at least one of gravity and an impinging water jet.

It may be advantageous, or even necessary, to utilize modern computing tools to predict the performance of an apparatus during use, and the effect of a design change on performance change. Efficient energy harvesting may require an extremely precise guide plate shape and position, particularly with respect to the terminal edge of the guide plate. FEM simulation (e.g., using ANSYS) may incorporate loads due to gravity, the impinging water jet (of ejected stock) and the like to identify optimal shapes and positions. A design may be modeled, performance may be estimated, the design may be changed (ostensibly improved) and the changed design may be modeled to determine whether the design change improved performance. While such a process may seem "trial and error" based, it may be significantly accelerated by using criteria identified herein as "targets." For example, a constraint on impingement angle may be readily incorporated into a model, and this constraint may be used to rapidly design a guide plate (e.g., according to a particular forming section geometry) that meets this constraint.

Different papermaking machines may have different operating conditions (*e.g.,* volume of stock/second, stock concentration, fiber type within the stock, % of recycled fiber % (*e.g.,* % of de-inked recycled paper), fiber composition (*e.g.,* birch, fir, spruce, pine), fiber length, fabric/wire velocity, angular velocities of various rolls, wire type, fabric type, and the like). Different machines may have different geometrical parameters. For example (at a given width machine), headbox exit gap size 102 may vary among machines (*e.g.,* between 2 and 30 mm, including 5-25mm, including 6-18 mm, including 9-14 mm, including 12-13 mm) A position 106 of headbox 101 with respect to the lead and forming rolls (*e.g.,* a distance from the headbox exit gap to the "sandwich" formed by the forming wire and fabric) may vary. A headbox angle 104 may vary. Diameters of forming roll, lead roll, and positions of these two rolls with respect to each other may vary.

Variation of these conditions and parameters may change the velocity, position, and/or shape of the water stream (or spray) ejected through forming wire 130. To accommodate differences in these characteristics, adjustable guide plate 150 may be adjusted in a manner that maximizes the transfer of kinetic energy from stock 108 to turbine 140. As such, apparatus 200 may be "tuned" to the particulars of a given papermaking machine, process, and stock via adjustment of guide plate 150 (and in some cases, adjustment of a position of turbine 140).

Embodiments described herein may be implemented with various different forming section configurations (*e.g.,* a crescent former, a DCT forming section as provided by Valmet AB, a twin wire former, and the like).

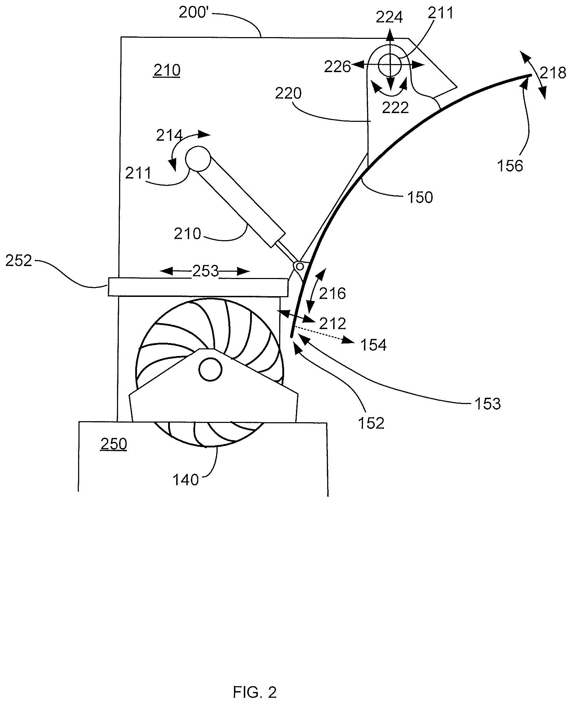

FIG. 2 illustrates an energy recovery apparatus, according to some embodiments. Apparatus 200' comprises an adjustable guide plate 150 configured to direct ejected water into turbine 140. Guide plate 150 is positioned by actuator 210 and pivot 220, which may comprise a pivot point 211 and a bracket, brace, linkage, or other fixture coupling the pivot point to guide plate 150. Actuator 210 and pivot 220 may be adjusted to bring guide plate 150 to a position that optimizes the transfer of momentum (from the water) into turbine 140. Actuator 210 may comprise a lead-screw actuator (e.g., as provided by PMC Swedrive). An exemplary actuator may provide an actuation force greater than 10kN, including greater than 20kN, or even greater than 30 kN for a papermaking machine having a turbine width of about 3 meters and a guide plate having two (laterally disposed) actuators. In some embodiments, several actuators are used (e.g., 2, 3, 4 or even 6 actuators). An aggregate actuation force may be determined using a simulation of an expected loading of the guide plate (e.g., due to gravity and the impinging water jet). An aggregate actuation force may be greater than 30kN, including greater than 40 kN, 50 kN, 60 kN, or even greater than 80 kN.

An actuator and/or pivot may be operated to position the guide plate in a "bypass position" that directs water away from the turbine. Such a configuration may enable modification and/or maintenance of the turbine while keeping the papermachine running.

An optimal alignment of guide plate 150 may minimize an amount of water that "bounces back" from the guide plate into the forming roll, maximizes the velocity of the water as it enters the turbine, minimizes frictional losses (*e.g.,* from water to the guide plate *per se*)*,* directs the water into the turbine at an angle that maximizes momentum transfer to the turbine, minimizes an "overshoot" of water past the guide plate (*e.g.,* between the guide plate and the lead roll 120), maximizes an amount of water that enters the turbine, and the like.

Actuator 210 may comprise a screw-driven actuator, a worm gear, a solenoid, a gear and pinion, a pneumatic actuator, and the like. Actuator 210 may be extended or retracted to move guide plate 150 in a direction 212 (with respect to turbine 140).

A terminal edge 152 (located closest to turbine 140) may be associated with a terminal surface 153, which may be the portion of guide plate 150 proximate to turbine 140. The alignment terminal surface 153 may define and/or direct ejected water into the turbine. Terminal surface 153 may be defined by a terminal surface normal 154 (defined near terminal edge 152, notwithstanding that guide plate 150 may be curved). Terminal edge 152 may be positioned such that the water stream (guided by guide plate 150) enters turbine 140 at a radial distance (from the turbine axle) that maximizes energy transfer to the turbine. Water may impinge the turbine close to tangent (at the outer circumference of the blades of turbine), yet should not miss the turbine or be deflected out of the turbine. For a typical thickness of a stream of water as it leaves terminal edge 152 (*e.g.,* 5-40mm, including 7-35 mm, including 8-30 mm, including 12-25 mm, including 18-20 mm), actuator 210 may provide for better than 1mm tolerance on positioning of the terminal edge 152, and preferably better than 5 degrees, including 1 degree, including 0.5 degrees, including 0.1 degrees of tolerance on the angle of terminal surface normal 154.

Actuator 210 may include an apparatus to allow guide plate 150 to move terminal edge 152 tangentially closer to or farther from turbine 140, in direction 216. Actuator 210 may include a pivot point 211 (*e.g.,* a hinge, which may be movable over a range of angles 214 and fixable at a particular angle) such that actuator 210 may be rotated, moving guide plate 150 in a direction 216 with respect to turbine 140. Actuator 210 may itself be rotated by a second actuator (not shown), such as a set screw or worm gear. Actuator 210 may adjust guide plate 150 to move a leading edge 156 over a range of angular displacement 218.

Pivot 220 may allow guide plate 150 to move (*e.g*., angularly, and in some cases laterally) as it is actuated by actuator 210. Pivot 220 may accommodate rotational displacement 222 (*i.e.,* pivoting) via pivot point 211. In some embodiments, a position of pivot point 211 may be adjusted in direction 224 and/or direction 226, typically within a range of +/- 30 mm, including +/-20mm. Pivot 220 may be adjusted (*e.g*., in direction 224 and/or 226) with shims, a set screw, or other fixable positioning device (not shown). Such adjustment may provide for adjusting a position of leading edge 156 of guide plate 150 (*e.g.,* to accommodate a position of actuator 210). In some implementations, actuator 210 is adjusted to align terminal edge 152 with turbine 140, and pivot 220 is adjusted to align leading edge 156 with respect to the forming roll and/or lead roll (FIG. 1). A lockdown mechanism (e.g., that tightly clamps the pivot point) may be used to "lock down" the pivot point into a desired position, with minimal (preferably no) "play" in the position. An exemplary lockdown mechanism (e.g., with multiple bolts) may lock down the pivot point within a deviation from a desired point that does not exceed 50 microns, particularly 10 microns, particularly 1 micron.

By providing for actuation (*e.g.,* in direction 212) and pivoting (*e.g.,* 214, 222), optionally in combination with lateral motion (*e.g.,* 216, 224, 226) a wide variety of guide plate positions may be created, enabling the adaptation of an apparatus 200/200' to a variety of different machine geometries and operating conditions.

In some implementations, actuator 210 and pivot 220 may be operated to position guide plate 150 without changing the curvature of guide plate 150. In some implementations, actuator 210 and pivot 220 (*e.g.,* using adjustment in directions 224 and/or 226) may be operated to change the curvature of guide plate 150.

To facilitate installation and maintenance, an energy recovery apparatus (*e.g.*, apparatus 200') may be implemented using a guide plate module 210 and a turbine module 250. By mounting components modularly, different modules may be easily separated and re-attached without (or with only minimal) need for realignment of the guide plate *per se.* Modular mounting may also facilitate the independent positioning of guide plate 150 and turbine 140 (*e.g.,* with respect to the forming roll and to each other).

Guide plate module 210 may include guide plate 150, actuator 210 and pivot 220 (*e.g.,* in an integrated piece). The position of terminal edge 152, leading edge 156, and the angle of guide plate 150 may be determined by actuator 210 and pivot 220, and all these components may be integrated into guide plate module 210, which may be mounted on (or with) turbine module 250.

In some embodiments, a guide plate module and a turbine module are coupled via a module mount, as shown in exemplary FIG. 2. A turbine module and a guide plate module may be coupled without a module mount. In FIG. 2, a module mount 252 couples guide plate module 210 to turbine module 250. Module mount 252 may provide for a lateral and/or vertical displacement of guide plate module 210 with respect to turbine module 250 (*e.g.,* over a range of +/- 40mm, including +/- 20mm). Module mount 252 may comprise a set screw, a worm gear, one or more shims, and the like, providing for movable and fixable position of the modules with respect to each other.

In some implementations, maintenance of turbine 140 may be facilitated by removing guide plate module 210 as a single unit. Guide plate module 210 may be separated from module mount 252, and/or module mount 252 may be separated from turbine module 250. Subsequently, guide plate module 210 may be replaced (onto turbine module 250) such that a prior alignment of guide plate 150 (with respect to turbine 140) is maintained after reattachment of the guide plate module. As a result, the need for re-alignment or "retuning" may be minimized or eliminated. Some embodiments (not shown) include a guide plate module and a turbine module in which the guide plate module does not have an adjustable guide plate. A "dummy module" may comprise (*e.g.,*) the mechanical pieces of a module, but not the turbine. A papermaking machine may comprise a dummy module, which may be subsequently upgraded via the addition of a turbine.

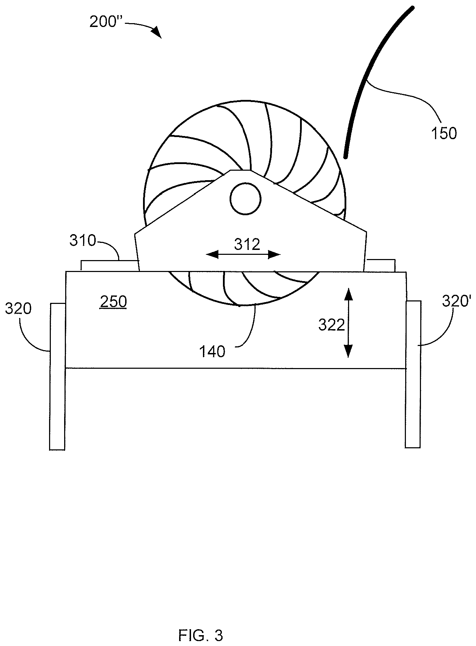

FIG. 3 illustrates a turbine mount, according to some embodiments. An apparatus 200" for recovering energy from a papermaking machine 100 (FIG. 1) may comprise an adjustable turbine 140. To facilitate adaptation apparatus 200" to a papermaking machine, turbine 140 may be adjusted to accommodate different sized forming rolls and/or forming wire velocities via a position of turbine 140. Some embodiments provide for an adjustable guide plate and an adjustable turbine. Some embodiments provide for an adjustable turbine without an adjustable guide plate. Apparatus 200" may be implemented with modular components (*e.g.,* a guide plate module 210, which may or may not be coupled to the turbine module using a module mount).

Turbine 140 may be adjustable using one or more positioning mechanisms 310, 320, 320' (which may be adjusted together and/or separately). In an exemplary embodiment, a positioning mechanism may include an apparatus (*e.g.,* a rail, a shim, a set screw, a worm gear, and the like) along which the turbine slides or moves, and a locking mechanism to hold the turbine in a desired position along the mechanism. A position along a first mechanism 310 may be chosen to move turbine 140 in direction 312 (closer to or farther from the forming roll, typically +/- 50 mm, including +/- 40mm, including +/- 30mm, including +/- 20mm, including +/- 10mm). A position along a second mechanism 320 and/or 320' may be chosen to move turbine 140 vertically (*e.g.*, in direction 322, typically +/- 50 mm, including +/- 40mm, including +/- 30mm, including +/-20mm, including +/- 10mm).

By adjusting turbine position according to a given forming roll diameter and expected forming wire speed, turbine 140 may be positioned at a radial distance (from the forming roll) and angular distance (from the headbox) that optimizes momentum transfer. For example, to minimize frictional losses associated with interaction between the water and the guide plate, turbine 140 may be located close to head box 100. However, turbine 140 should be positioned far enough away from headbox 101 that water is not ejected from the forming roll at an angular position along the forming roll whereby it passes by the turbine.

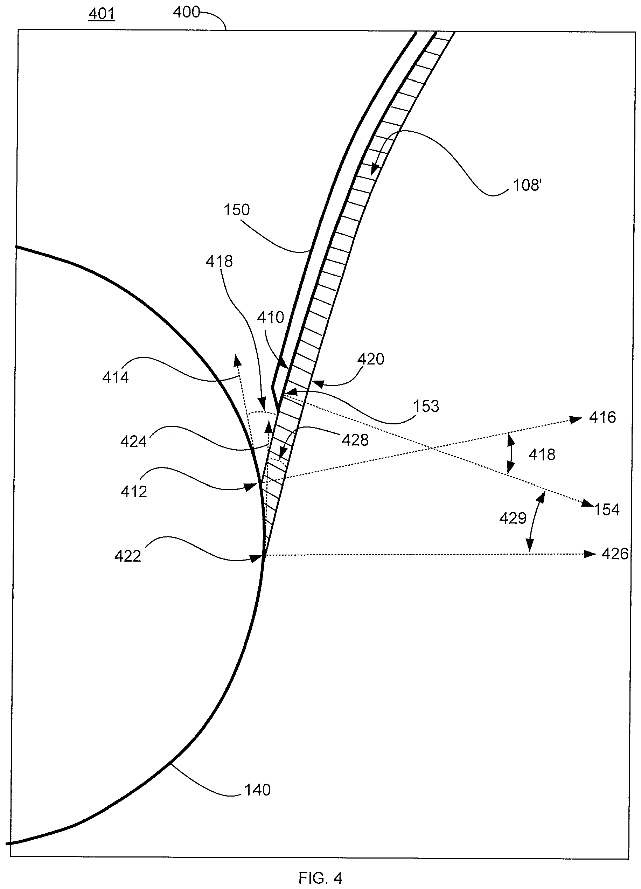

FIG. 4 illustrates an exemplary alignment of a guide plate, according to some embodiments. A window 400 in a shroud or cover 401 that encloses an apparatus (*e.g.,* 200, 200', 200") may be used to align a guide plate (*e.g.,* guide plate 150). A user may look through window 400 to align a guide plate. In some cases, a camera (looking through window 400) generates a signal comprising digital data representing an image of the guide plate and turbine. These data may be used by a processor (not shown) coupled to a storage medium having image processing software and closed-loop alignment software to align the guide plate (*e.g.,* operating an actuator in response to data received from a measurement sensor). The software may comprise instructions executable by the processor to perform a method (*e.g.,* to align the guide plate). In some cases, the processor implements a closed-loop control of guide plate 150 (*e.g.,* by controlling actuator 210 according to data from the camera and/or a position sensor sensing the position of the guide plate, not shown) and comparing a measured position to a desired position to align guide plate 150. In some cases, the guide plate may be aligned by receiving camera data, position data, electrical output data, and/or other data, calculating a difference between actual and desired position, and actuating the guide plate (*e.g.,* with a gear motor coupled to the guide plate and/or turbine) to reposition in a direction that reduces the difference.

An output from turbine 140 *(e.g.,* the power generated by generator 160 at constant stock flow) may be used to align guide plate 150. An alignment procedure may position guide plate 150 in an orientation that maximizes the energy recovered from stock 108 and/or minimizes wear and/or damage to various components.

In FIG. 4, a schematic alignment of guide plate 150 and an exemplary effect on the flow of water 108' ejected from stock 108 (FIG. 1) is illustrated. A plate side 410 of the impinging water 108' and an air side 420 of the water 108' may define inner and outer boundaries of the stream (or plane) of water 108' impinging on turbine 140. A line extending from plate side 410 to turbine 140 may intersect an outer perimeter (*e.g.,* of the blades, not shown) of turbine 140 at a point 412 on turbine 140. Point 412 may describe the point at which the plate side of water 108' is expected to contact turbine 140. Point 412 may have a tangent 414 and a normal 416.

An angle 418 between tangent 414 and plate side 410 (*i.e.,* between the extension from plate side 410 to point 412) may define an impinging angle 418 for the plate side of impinging water 108'. Impinging angle 418 may be defined by the angle between normal 416 and terminal surface normal 154. Angle 418 may be between 15 and 35 degrees, including between 20 and 30 degrees, including between 21 and 28 degrees, including between 22 and 26 degrees, including about 24 degrees.

Water 108' resulting from the filtration of stock 108 by forming wire 130 may be ejected over a span of angular rotation of forming roll 110 (FIG. 1). Ejection may typically occur over 10-60 degrees of rotation, including 20-50 degrees, including 25-45 degrees) after injection of stock 108 into the forming wire/fabric "sandwich." Water 108' may impact guide plate 150 and be guided by guide plate 150 into turbine 140. A guide plate may be aligned such that the density of water 108' near plate side 410 may be higher than the density of water near air side 420.

A distance between air side 420 and plate side 410 may define a thickness of the stream of water 108', which may be 10-30% larger (including 15-25%, including 18-22% larger) than headbox exit gap size 102 (*e.g.,* due to the incorporation of air into water 108'). In some machines 100, the distance between air side 420 and plate side 410 may be 5-40mm, including 7-35 mm, including 8-30 mm, including 12-25 mm, including 18-20 mm. The thickness of this impinging stream of water may result in the stream arriving at turbine 140 at different radial and angular positions on turbine 140, which may affect efficiency; alignment of guide plate 150 may improve this efficiency.

A thickness of the stream of water 108' (*e.g.,* the distance between plate side 410 and air side 420) may result in the air side of water 108' arriving at turbine 140 at a different angular position than that of the plate side. For example, the air side 420 of water 108' may contact turbine 140 at point 422, which may have a tangent 424 and a normal 426. An impingement angle 428 between tangent 424 and the direction of impinging air side water 108' may define an "angle of attack" for the air side of the water stream. Impingement angle 429 between terminal surface normal 154 and normal 426 may also define an "angle of attack" for the air side 420 of impinging water stream 108'. Angle 429 may be substantially the same as angle 428, but may differ (*e.g.,* if the air side of the water comes off the plate at a slightly different angle than the plate side of the water).

Impingement angles 428 and/or 429 may be smaller than impingement angle 418. Impingement angle 428 and/or 429 may be between 0 and 25 degrees, including between 5 and 20 degrees, including between 8 and 16 degrees, including between 10 and 14 degrees, including about 12 degrees.

Impingement angles 418, 428, and 429 may be chosen to maximize a transfer of momentum from water 108' to turbine 140. In some embodiments, guide plate 150 is adjusted to minimize impingement angles, subject to the constraint that water 108' does not "miss" turbine 140. Smaller impingement angles may increase momentum transfer, but too small an impingement angle may result in water 108' being ejected outward from turbine 140 (instead of inward), or even in a portion of water 108' passing by turbine 140 without imparting momentum to the blades of the turbine.

In FIG. 4, the guide plate geometry provides for water 108' on plate side 410 to arrive at turbine 140 at an earlier angular position than that of the water on air side 420 (turbine 140 may spin clockwise). In some embodiments, a guide plate may be aligned such that water from air side 420 arrives first (at a larger impingement angle than that of plate side 410).

An adjustable guide plate may provide for a precisely controlled alignment of impinging water stream 108' (which may appear in 3 dimensions as a "sheet" or "plane" of water). A controlled alignment may maximize the transfer of momentum from water 108' to turbine 140, increasing the efficiency with which energy is recovered from the papermaking process. To maximize energy transfer, guide plate 150 is typically positioned very close to turbine 140. For example, the point of terminal surface 153 that is closest to turbine 140 (*e.g.,* the "back corner" of the guide plate) may be less than 5mm, including less than 2mm, including 0.5 to 1.5 mm, from the blades of turbine 140. With such proximity, guide plate alignment is particularly important.

### EXAMPLE 1

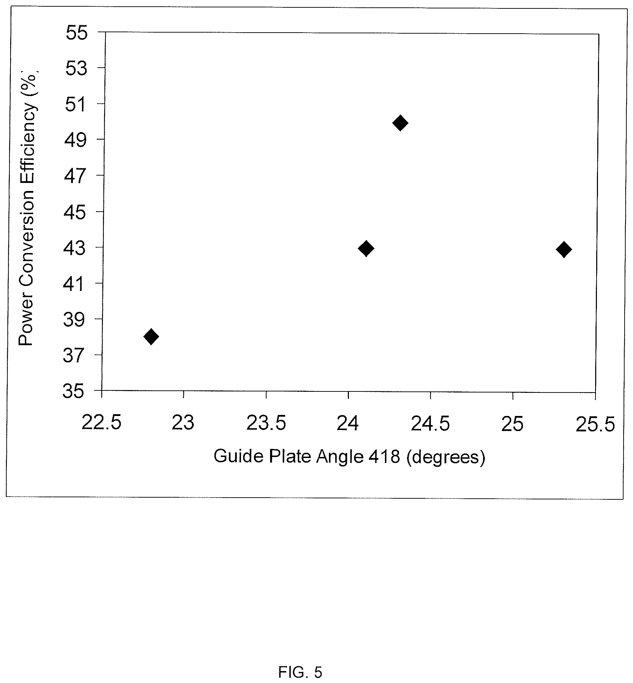

FIG. 5 illustrates representative experimental results from a first papermaking machine, according to some embodiments. FIG. 5 plots a "power conversion efficiency" (*e.g.,* based on generator electrical output) as a function of angle 418, for a representative apparatus 200 operating as part of a papermaking machine. In this embodiment, the maximum efficiency (50%) was measured at angle 418 = 24.3 degrees. However, a slightly smaller angle 418 (24.1 degrees) resulted in a substantial decrease in efficiency (to 43%). In this example, relatively small changes in angle 418 (the angle at which impinging water strikes turbine 140) resulted in relatively large changes in efficiency, demonstrating the importance of accurate alignment of the guide plate with respect to the turbine.

### EXAMPLE 2

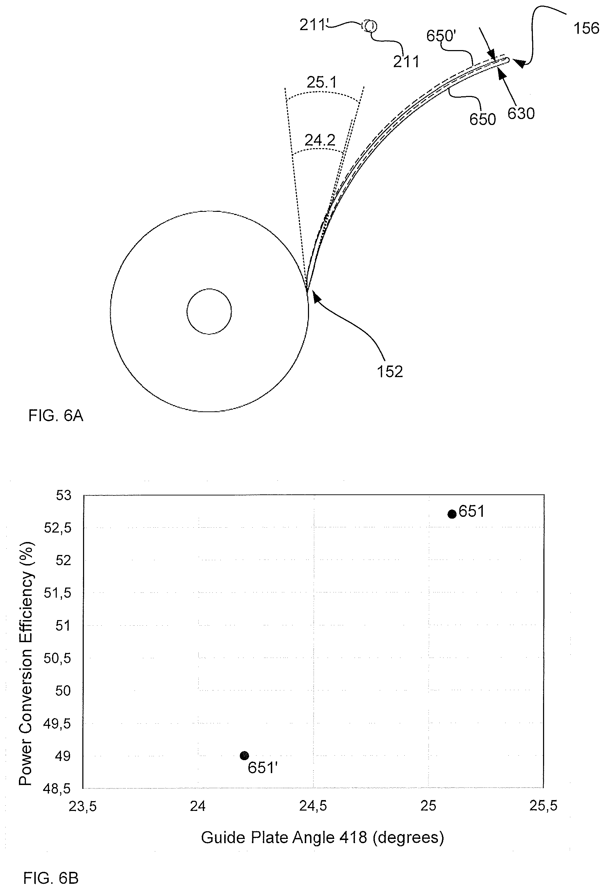

FIGS. 6A and 6B compare two guide plate positions and their associated effect on power conversion efficiency for another papermaking machine, according to an embodiment. FIG. 6A illustrates two different positions of a guide plate, illustrated as guide plate 650 in a first position, and guide plate 650' in a second position. In this example, the difference between the two positions was made via an adjustment of the actuator (not shown) and pivot point 211 (with the two positions of the pivot point shown as 211 and 211'). The difference between these two pivot point positions was 2.6mm vertically and 10.7 mm horizontally, and the size of guide plate 650 was 920 mm between the lead edge 156 and terminal edge 152. The actuator (not shown) was also adjusted, such that the position of the terminal edge with respect to the turbine was the same in both configurations.

The papermaking machine was operated in both configurations, and power output was measured for the two different guide plate positions. Power output was used to calculate power conversion efficiency. FIG. 6B shows a significant change in power conversion efficiency between the two guide plate positions. For guide plate (position) 650, having an incident angle of 25.1 degrees, the power conversion efficiency was 52.7%. For guide plate (position) 650', having an incident angle of 24.2 degrees, the efficiency was 49%. For the size of the machine and turbine (2.9 m) width, this corresponded to a difference in power output of 3.8 kW (about enough to power a typical house). Thus, what might appear to be a relatively small change in position resulted in a large change in power conversion efficiency. As such, a highly accurate and precise apparatus for positioning the guide plate provides for the millimeter-level precision needed to achieve maximal energy efficiency.

In some cases, a preferred range of incident angles may be identified. In some cases, the "ideal" angle may vary from machine to machine, as shown by comparison between FIGS. 5 and 6B. The forming section of the machine used to generate the data in FIG. 6B was different than the forming secion of the machine used to generate the data in FIG. 5. The forming sections had slightly different roll geometries. The guide plate used for the data in FIG. 6B was slightly longer than that used for the data in FIG. 5.

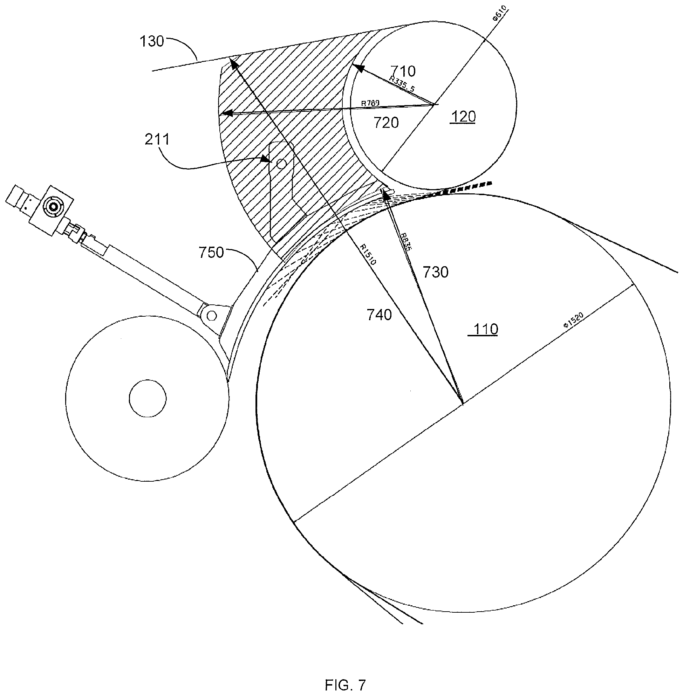

FIG. 7 illustrates an exemplary region of a forming section within which a guide plate pivot point may be located, according to some embodiments. To reduce the likelihood that incoming water may "shoot over" the guide plate, the leading edge of the guide plate may be located relatively "far into" the junction region between the lead and forming rolls. Additionally, the terminal edge is typically located as close as possible (e.g., about 0.5 to 1.5 mm) to the turbine. Adjustment of the guide plate subject to these constraints typically requires the achievement of a desired guide plate geometry (with respect to the incoming water jet) without running the guide plate into the forming roll (or wire), the lead roll, or the turbine.

In some systems, an optimal position of pivot point 211 may be chosen, according to the geometry of the forming section, that offers a maximum range of adjustability with minimum chance of contact to the lead roll, forming roll, and forming wire. An exemplary region for pivot point location is illustrated in FIG. 7. The forming wire typically defines a boundary of the region (e.g., an upper boundary).

For a lead roll having a radius 710, the pivot point may be located a distance 720 from the center of the lead roll that is between about 108% and 260% of radius 710, particularly between about 110% and 230%, particularly between about 160% and 224%, particularly between about 165% and 214% of radius 710.

For a forming roll having a radius 730, the pivot point may be located a distance 740 from the center of the forming roll that is between about 108% and 200% of radius 740, particularly between about 120% and 160%, particularly between about 135% and 145% of radius 730.

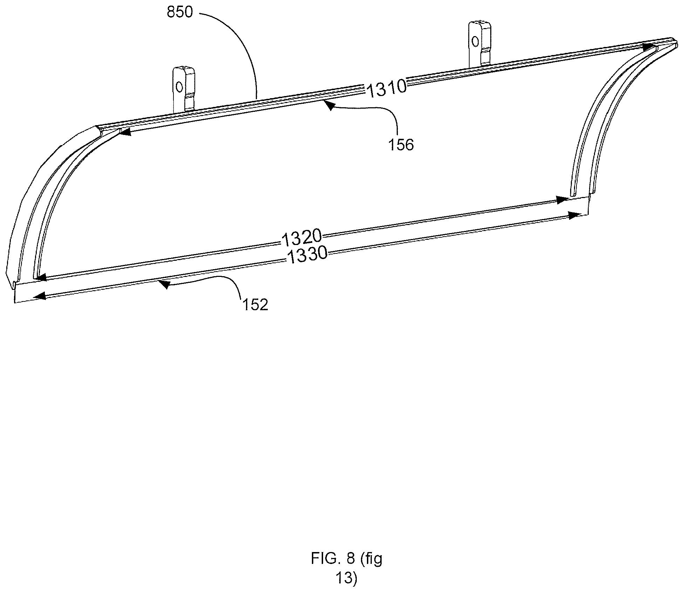

FIG. 8 illustrates a guide plate according to an embodiment, with several representative identification lines used to demarcate deformation during FEM simulations. In this example, guide plate 850 is a scale model. Line 1310 spans the guide plate across a cross-direction of the guide plate proximate to leading edge 156. Lines 1320 and 1330 span the guide plate in a terminal portion of the guide plate that directs water into the turbine. Line 1330 is located proximate to terminal edge 152. Line 1320 is located several centimeters upward on the guide plate. For some guide plates, the terminal portion (e.g., from lines 1320 to 1330) may have a curvature that is larger than that of the center of the guide plate. The terminal portion may be planar, as in this example. A terminal portion may be between about 3 and 15 cm, including 4 and 10 cm, including between 6 and 9 cm. Lines 1310, 1320, and 1330 will be used to identify representative deformations in the following FEM simulations.

### EXAMPLE 3

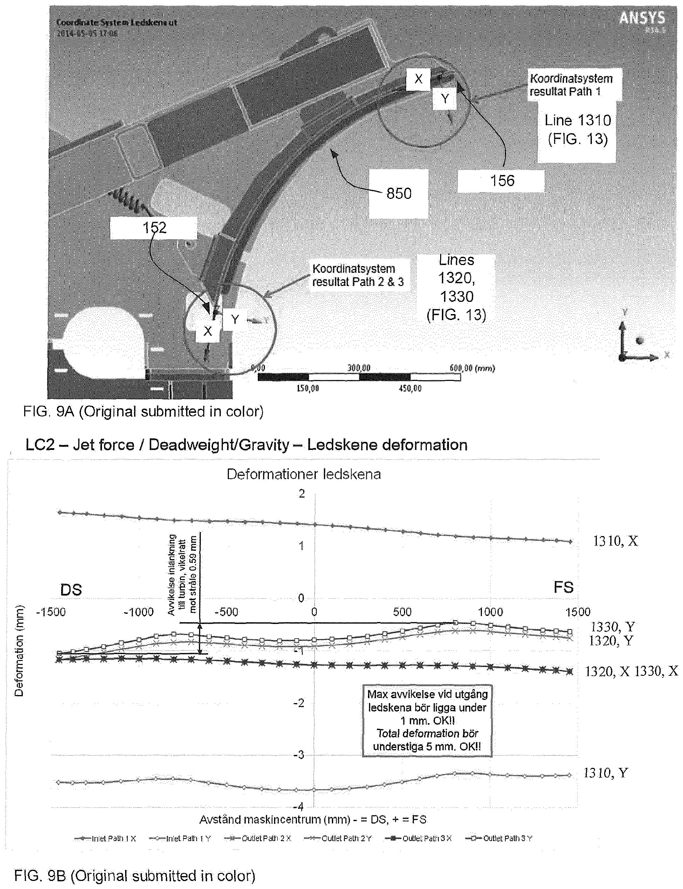

FIG. 9A illustrates the coordinate systems used to report the modeled behavior of the lines shown in FIG. 8, according to an embodiment. In FIG. 9A, a finite element model (in this case, using ANSYS) was used for deformation modeling, according to some embodiments. FIG. 9A illustrates the coordinates used to represent simulated deformation at lines 1310, 1320 and 1330 from FIG. 8. In each portion (leading and terminal) of the guide plate, the relevant coordinate system comprises an x-direction that is tangent to the guide plate surface (with positive value pointing "downstream") and a y-direction that is orthogonal to the surface (of that portion). Because the surface is curved, the coordinate systems "change direction." Thus, a positive x-value for line 1310 represents deformation in a similar direction as a negative y-value (for lines 1320 and 1330). A positive y-value (for line 1310) represents a similar deformation as a positive x-value for lines 1320 and 1330. Guide plate 1350 utilizes box sections and a back sheet.

FIG. 9B is a plot of modeled deformation (generated using ANSYS) of guide plate 850, under both gravity loading and jet force loading (from velocity and volume of impinging water of an actual paper machine in actual operating conditions) according to an embodiment. The deformation/displacement of line 1310 does not exceed 2mm in the x-direction, or "away" from the forming roll. The deformation/displacement of line 1310 does not exceed 4mm in the negative-y direction (or "upward" in FIG. 9A. The deformation/displacement of lines 1320 and 1330 does not exceed 1.5mm in the negative-x direction (or "upward" on FIG. 9A). The deformation/displacement of lines 1320 and 1330 does not exceed 1.1mm in the negative-y direction (or "downstream" with respect to the machine direction).

Deformation due to gravitational loads may be accommodated during installation. For example, a guide plate may be installed and aligned (i.e., under gravity load) with respect to the forming roll, lead roll, and turbine. However, deformation due to jet forces requires starting and running the machine, which should not be undertaken without confidence that an apparatus will function as desired. FEM simulations may be used to determine a shape, size, and mounting configuration expected to result in a desired performance.

### EXAMPLE 4

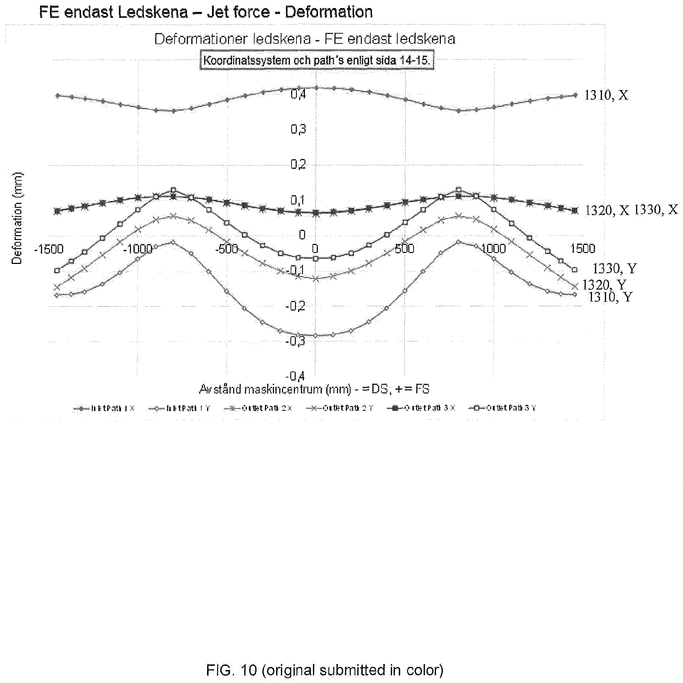

FIG. 10 illustrates a predicted deformation due to jet loading by impinging water, according to some embodiments. Efficiency may typically be increased by positioning the "closest" or "most rearward" corner of the terminal edge of the guide plate very close (e.g., within a few mm, including within 2mm, including within 1mm) of the turbine, particularly in combination with as thin a guide plate as possible. Such positioning requires confidence that, during operation, the guide plate and turbine will not contact each other inadvertently. FIG. 10 illustrates the effect of jet forces on guide plate shape and position, using lines 1310, 1320, and 1330 (FIG. 8) and the coordinate systems of FIG. 9A. The expected deformation of the terminal portion (represented by lines 1320 and 1330) does not exceed 0.12 mm in the x-direction ("downward" toward the turbine) and negative 0.15 mm in the y-direction ("downstream" toward the turbine). These values may be used to offset the terminal portion during installation. These values may also increase confidence that the shape of the guide plate will not change so much during operation (via jet forces) that performance may be hindered or the equipment may be damaged.

The lines show a "wavy" profile across the plate, associated with the position of the (two) mounting points. Increased box section thickness may be used to reduce this waviness. An increased number of mounting points (e.g., three, four, or even six mounting points) may also reduce this waviness. Comparing FIGS. 9B and 10, the importance of FEM simulations of guide plate shape become apparent. For the leading portion, gravity loads may be appreciable. Without the jet, the leading portion may "sag" under its own weight, which could cause a portion of the jet to "pass above" the leading edge. However, jet contact with the leading portion may "lift" that portion, which could cause the leading edge to contact the lead roll. An optimal guide plate shape may capture impinging water without deforming into another component, and still maintain desired impingement angles to result in efficient energy transfer to the turbine.

For the terminal portion, the jet forces may result in significant deformation (as compared to gravity loading). In such a configuration, FEM simulations may be critical to predict an actual position of the terminal edge (with respect to the turbine) prior to starting the machine.

### EXAMPLE 5

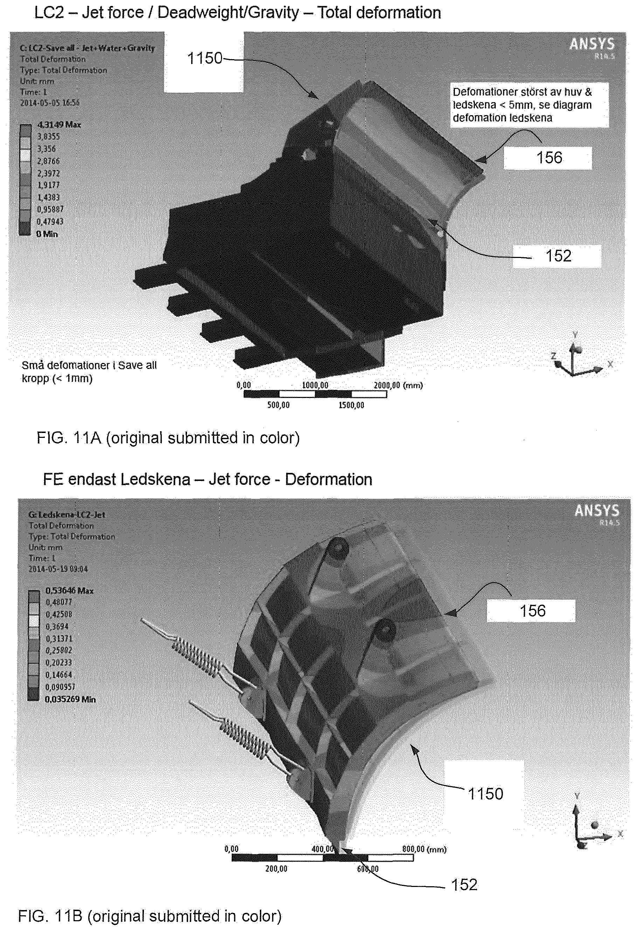

FIGS. 11A and 11B illustrate modeled deformation of a guide plate, according to some embodiments, in this example using ANSYS. FIG. 11A illustrates the combination of jet loading and gravity loading, and illustrates a maximum deformation (before and after the jet is turned on) of the leading portion (with leading edge 156) of 4.31 mm. FIG. 11B illustrates deformation and displacement of the guide plate due to jet loading only, with the back plate removed to view the back side of the guiding surface *per se* (showing a web of reinforcement beams used to stiffen the plate). FIG 11B compares the calculated deformation and displacement to an "unstressed" shape and position (which is shown as a "shadow" using exaggerated displacements in the illustration). Thus, the deformation and displacement is graphically exaggerated to facilitate viewing. The overall curvature of the guide plate may decrease slightly (the loaded guide plate is more "bowed") and the leading edge of the guide plate is moved "downstream" slightly. Additionally, the lateral bending "waviness" is shown. However, overall deformation does not exceed 0.54mm.

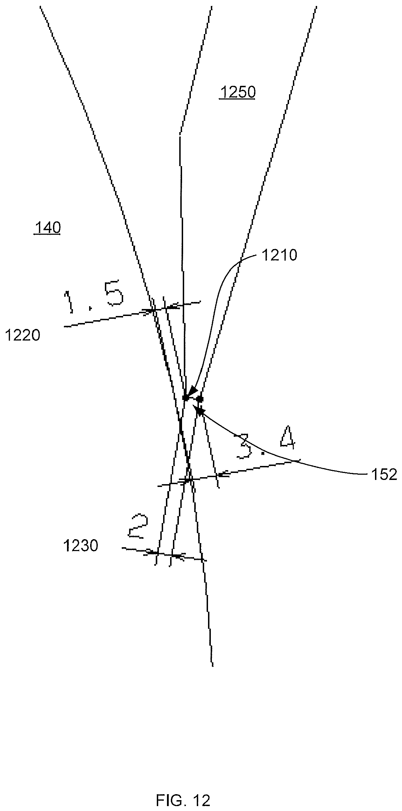

FIG. 12 illustrates a representative distance between a guide plate and a turbine, according to some embodiments. FIG. 12 provides additional detail with respect to terminal "edge" 152, which, notwithstanding that it may be described as an "edge," typically has appreciable thickness (e.g., to prevent "rounding over" of the edge by water pressure). In FIG. 12, guide plate 1250 comprises terminal edge 152, which includes a "closest portion" 1210 (i.e., that portion of the guide plate that would contact the turbine, were the plate to contact the turbine). Using adjustment mechanisms, designs, and modeling methods described herein, the guide plate may be positioned very close the turbine (with confidence). In a typical installation, a distance (1220) between a closest portion (1210) of the guide plate and the turbine is less than 4mm, particularly between about 0.5 and 3mm, including between 0.75 and 2mm. A thickness 1230 of edge 152 may be less than 5mm, including 0.4-4 mm, including 1-3 mm, including 1.5 to 2.5mm, with guide plate 1250 having 2mm thickness. A typical expected deformation of the terminal edge during use (up to 0.5mm) would leave about 1mm of "buffer" between the plate and turbine. A typical distance from the "contact surface" of the guide plate to the turbine may be between 1.5 and 5 mm, including between 2 and 4 mm, including between about 3.2 and 3.8 mm. Distance 1220 and thickness 1230 may be chosen according to (inter alia) an expected thickness of the film of water being transferred into the turbine (e.g., the distance between plate side 410 and the air side 420 of water 108', FIG. 4). Such a distance may be determined using computer simulation of the forming section under representative operating conditions (e.g., headbox flow rate, pressure, stock composition, guide plate geometry, and roll geometries).

Deviation (during use) from a predicted shape or position might result in severe damage. As such, achieving such precise tolerances on position and shape typically require the use of computer-implemented design and modeling techniques. Such tools are readily available to one of ordinary skill. FEM methods may be used to design geometry (e.g., number and size of actuator and pivot connections), spacing between connections, box size and shape, metal thicknesses, and the like. This geometry may be modeled to predict an actual shape of the guide plate when loaded (during use). The actual shape may be compared with desired constraints (e.g., on impinging angles) to ensure that ejected water actually impinges at the desired angles. As a result, energy efficiency may be maximized, while probability of damage (e.g., due to inadvertent contact) may be minimized.

Embodiments need not incorporate all, or even a plurality of, features described herein. Various features described herein may be implemented independently of each other and/or in combination. An explicit combination of features does not preclude the omission of any of these features from other embodiments.

The above description is illustrative and not restrictive. Many variations of the invention will become apparent to those of skill in the art upon review of this disclosure. The scope of the invention should, therefore, be determined not with reference to the above description, but instead should be determined by the appended claims.

## Claims

1. An apparatus (200, 200') for recovering energy from a papermaking machine (100), the papermaking machine comprising a forming wire loop (130) driven around a lead roll (120), a fabric loop (132) driven around a forming roll (110), and a headbox (101) configured to inject a stock (108) into a moving sandwich created by the forming wire and fabric loops, the apparatus comprising:
a turbine (140) coupled to a generator (160);
a guide plate (150, 150', 650, 750, 850, 1150, 1250) shaped to direct water ejected through the forming wire into the turbine, the guide plate terminating in a terminal edge (152) proximate the turbine, **characterized by**
an actuator (210) coupled to the guide plate; and
a pivot (220) coupled to the guide plate,
the actuator and pivot operable to adjust the guide plate such that an angle (418) between:
an alignment terminal surface (153) for defining and/or directing ejected water into the turbine comprising the terminal edge (152) of the guide plate; and
a tangent (414) of the turbine at a point (412) at which an extension line of the alignment terminal surface (153) from the terminal edge (152) to the turbine intersects the turbine,
is between about 15 and 35 degrees.

2. The apparatus of claim 1, wherein a distance (1220) between a closest portion (1210) of the guide plate and the turbine (140) is less than 4 mm.

3. The apparatus of either of claims 1 and 2, wherein the angle (418) is between 23 and 28 degrees, particularly about 24 and 27 degrees; particularly about 25 and 26 degrees; particularly 24.5 and 25.5 degree.

4. The apparatus of any of claims 1-3, wherein a distance (410-420) between:
the extension line from the alignment terminal surface (153) to the point (412) at which the extension line intersects the turbine (140); and
the closest line that is parallel to the extension line and tangent to an outer circumference of the turbine,
does not exceed 40mm, including 30mm, including 20mm, including 15mm.

5. The apparatus of any of claims 1-4, wherein the pivot has a pivot point (211) for which a location of the pivot point (211) with respect to a center of the lead roll (120) is between about:
108% and 260%;
particularly 110% and 230%;
particularly 160% and 224%;
particularly 165% and 214%;
of a radius of the lead roll.

6. The apparatus of any of claims 1-5, wherein the pivot has a pivot point (211) for which a location of the pivot point (211) with respect to a center of the forming roll (110) is between about:
108% and 200%;
particularly 120% and 160%;
particularly 135% and 145% of a radius of the forming roll.

7. The apparatus of any of claims 1-6, wherein the actuator comprises a lead-screw or worm-screw actuator having an actuation force greater than 10kN, particularly greater than 20kN, particularly greater than 30kN.

8. The apparatus of claim 7, wherein the actuator comprises a plurality of actuators having an aggregate actuation force greater than 30kN, particularly greater than 40kN, particularly greater than 60kN.

9. The apparatus of any of claims 1-7, wherein the pivot includes an adjustable pivot.

10. The apparatus of any of claims 1-9, wherein at least one of the actuator and pivot is configurable to position the guide plate in a bypass position, such that the extension line extending from the alignment terminal surface (153) toward the turbine does not intersect the turbine.

11. The apparatus of any of claims 1-10, wherein:
the turbine is disposed within a turbine module (250); and
the guide plate, actuator, and pivot are disposed within a guide plate module (210), the guide plate module forming an integrated part that affixes the guide plate, actuator and pivot with respect to each other;
the guide plate module separable from the turbine module to facilitate removal and replacement of the guide plate without changing the position of the terminal edge or the angle of the guide plate when the guide plate module is replaced.

12. The apparatus of any of claim 1-11, wherein the turbine is mounted using one or more positioning mechanisms (310, 320, 320') operable to position the turbine at different positions, preferably with respect to at least one of the forming roll and the lead roll.

13. A papermaking machine comprising:
a forming wire loop (130) configured to be driven around a lead roll (120), a fabric loop (132) configured to be driven around a forming roll (110), and a headbox (101) configured to inject a stock (108) into a sandwich created by the forming wire and fabric loops; and
an apparatus (200, 200', 200") according to any of claims 1 to 12.

14. A method for aligning an energy recovery apparatus (200, 200', 200") in a papermaking machine (100), the method comprising:
providing a papermaking machine (100) comprising least one apparatus according to any of claims 1 to 13;
operating the papermaking machine;
adjusting at least one of a position of the guide plate and a position of the turbine; and
affixing at least one of the guide plate and turbine in a position at which an efficiency of energy recovered from the stock as compared to energy imparted to the stock is a maximum.

15. The method of claim 14, wherein at least one of the guide plate and the turbine is positioned by a computer-controlled actuator operable by a processor, the processor coupled to a computer-readable, non transitory storage medium having instructions thereon executable by the processor to position the guide plate or turbine using an iterative, closed-loop control method comprising:
determining a desired position of at least one of the guide plate and turbine;
receiving sensor data from a sensor configured to sense an actual position of the guide plate or turbine;
calculating a difference between the desired and actual positions; and
instructing the actuator to adjust the guide plate in a manner that reduces the difference.

## Patentansprüche

1. Vorrichtung (200, 200') zur Rückgewinnung von Energie aus einer Papierherstellungsmaschine (100), wobei die Papierherstellungsmaschine eine um eine Leitwalze (120) herum angetriebene Formiersiebschleife (130), eine um eine Formierwalze (110) herum angetriebene Gewebeschleife (132) und einen Stoffauflauf (101) umfasst, konfiguriert, um einen Bestand (108) in eine sich bewegende Schichtstruktur einzuspritzen, die durch die Formiersieb- und Gewebeschleifen erzeugt wird, wobei die Vorrichtung umfasst:
eine mit einem Generator (160) gekoppelte Turbine (140);
eine Führungsplatte (150, 150', 650, 750, 850, 1150, 1250), die geformt ist, um durch das Formiersieb ausgestoßenes Wasser in die Turbine zu leiten, wobei die Führungsplatte in einer Endkante (152) nahe der Turbine endet, **gekennzeichnet durch**
einen mit der Führungsplatte gekoppelten Aktuator (210); und
ein mit der Führungsplatte gekoppeltes Drehgelenk (220),
wobei der Aktuator und das Drehgelenk betriebsfähig sind, um die Führungsplatte so einzustellen, dass ein Winkel (418) zwischen:
einer Ausrichtungsendoberfläche (153) zum Definieren und/oder Leiten von ausgestoßenem Wasser in die Turbine, umfassend die Endkante (152) der Führungsplatte; und
einer Tangente (414) der Turbine an einem Punkt (412), an dem eine Verlängerungslinie der Ausrichtungsendoberfläche (153) von der Endkante (152) zu der Turbine die Turbine schneidet,
zwischen etwa 15 und 35 Grad beträgt.

2. Vorrichtung nach Anspruch 1, wobei ein Abstand (1220) zwischen einem nächstgelegenen Abschnitt (1210) der Führungsplatte und der Turbine (140) weniger als 4 mm beträgt.

3. Vorrichtung nach einem der Ansprüche 1 und 2, wobei der Winkel (418) zwischen 23 und 28 Grad, insbesondere etwa 24 und 27 Grad; insbesondere etwa 25 und 26 Grad; insbesondere 24,5 und 25,5 Grad beträgt.

4. Vorrichtung nach einem der Ansprüche 1-3, wobei ein Abstand (410-420) zwischen: der Verlängerungslinie von der Ausrichtungsendoberfläche (153) zu dem Punkt (412), an dem die Verlängerungslinie die Turbine (140) schneidet; und der nächstgelegenen Linie, die parallel zu der Verlängerungslinie und tangential zu einem Außenumfang der Turbine verläuft,
40 mm, einschließlich 30 mm, einschließlich 20 mm, einschließlich 15 mm, nicht überschreitet.

5. Vorrichtung nach einem der Ansprüche 1-4, wobei das Drehgelenk einen Drehpunkt (211) aufweist, für den eine Stelle des Drehpunkts (211) in Bezug auf eine Mitte der Leitwalze (120) zwischen etwa:
108 % und 260 %;
insbesondere 110 % und 230 %;
insbesondere 160 % und 224 %;
insbesondere 165 % und 214 %;
eines Radius der Leitwalze beträgt.

6. Vorrichtung nach einem der Ansprüche 1-5, wobei das Drehgelenk einen Drehpunkt (211) aufweist, für den eine Stelle des Drehpunkts (211) in Bezug auf eine Mitte der Formierwalze (110) zwischen etwa:
108 % und 200 %;
insbesondere 120 % und 160 %;
insbesondere 135 % und 145 % eines Radius der Formierwalze beträgt.

7. Vorrichtung nach einem der Ansprüche 1-6, wobei der Aktuator einen Leitspindel- oder Schneckenspindel-Aktuator mit einer Betätigungskraft von mehr als 10 kN, insbesondere mehr als 20 kN, insbesondere mehr als 30 kN umfasst.

8. Vorrichtung nach Anspruch 7, wobei der Aktuator eine Vielzahl von Aktuatoren mit einer Gesamtbetätigungskraft von mehr als 30 kN, insbesondere mehr als 40 kN, insbesondere mehr als 60 kN umfasst.

9. Vorrichtung nach einem der Ansprüche 1-7, wobei das Drehgelenk einen einstellbaren Drehpunkt einschließt.

10. Vorrichtung nach einem der Ansprüche 1-9, wobei mindestens eines von dem Aktuator und dem Drehgelenk konfigurierbar ist, um die Führungsplatte in eine Bypass-Position zu positionieren, sodass die Verlängerungslinie, die sich von der Ausrichtungsendoberfläche (153) in Richtung der Turbine erstreckt, die Turbine nicht schneidet.

11. Vorrichtung nach einem der Ansprüche 1-10, wobei:
die Turbine innerhalb eines Turbinenmoduls (250) angeordnet ist; und
die Führungsplatte, der Aktuator und das Drehgelenk innerhalb eines Führungsplattenmoduls (210) angeordnet sind, wobei das Führungsplattenmodul ein integriertes Teil bildet, das die Führungsplatte, den Aktuator und das Drehgelenk in Bezug aufeinander befestigt;
wobei das Führungsplattenmodul von dem Turbinenmodul trennbar ist, um Entfernen und Auswechseln der Führungsplatte zu erleichtern, ohne die Position der Endkante oder den Winkel der Führungsplatte zu ändern, wenn das Führungsplattenmodul ausgewechselt wird.

12. Vorrichtung nach einem der Ansprüche 1-11, wobei die Turbine unter Verwendung eines oder mehrerer Positionierungsmechanismen (310, 320, 320') montiert ist, betriebsfähig, um die Turbine an verschiedenen Positionen zu positionieren, vorzugsweise in Bezug auf mindestens eine von der Formierwalze und der Leitwalze.

13. Papierherstellungsmaschine, umfassend:
eine Formiersiebschleife (130), konfiguriert, um um eine Leitwalze (120) herum angetrieben zu werden, eine Gewebeschleife (132), konfiguriert, um um eine Formierwalze (110) herum angetrieben zu werden, und einen Stoffauflauf (101), konfiguriert, um einen Bestand (108) in eine Schichtstruktur einzuspritzen, die durch die Formiersiebschleife und Gewebeschleife erzeugt wird; und
eine Vorrichtung (200, 200', 200") nach einem der Ansprüche 1 bis 12.

14. Verfahren zum Ausrichten einer Vorrichtung zur Rückgewinnung von Energie (200, 200', 200") in einer Papierherstellungsmaschine (100), wobei das Verfahren umfasst:
Bereitstellen einer Papierherstellungsmaschine (100), die mindestens eine Vorrichtung nach einem der Ansprüche 1 bis 13 umfasst;
Betreiben der Papierherstellungsmaschine;
Einstellen von mindestens einer von einer Position der Führungsplatte und einer Position der Turbine; und
Befestigen von mindestens einer von der Führungsplatte und Turbine in einer Position, in der ein Wirkungsgrad von aus dem Bestand zurückgewonnener Energie im Vergleich zu dem Bestand zugeführter Energie maximal ist.

15. Verfahren nach Anspruch 14, wobei mindestens eine von der Führungsplatte und der Turbine durch einen computergesteuerten Aktuator positioniert wird, der durch einen Prozessor betrieben werden kann, wobei der Prozessor mit einem computerlesbaren, nichtflüchtigen Speichermedium mit Anweisungen darauf gekoppelt ist, die durch den Prozessor ausführbar sind, um die Führungsplatte oder Turbine unter Verwendung eines iterativen Regelkreisverfahrens zu positionieren, umfassend:
Bestimmen einer gewünschten Position von mindestens einer von der Führungsplatte und Turbine; Empfangen von Sensordaten von einem Sensor, konfiguriert, um eine Ist-Position der Führungsplatte oder Turbine zu erfassen;
Berechnen einer Differenz zwischen den Soll- und Ist-Positionen; und
Anweisen des Aktuators, die Führungsplatte auf eine Weise einzustellen, die die Differenz verringert.

## Revendications

1. Appareil (200, 200') pour récupérer de l'énergie provenant d'une machine de fabrication de papier (100), la machine de fabrication de papier comprenant une boucle de toile de formage (130) entraînée autour d'un rouleau guide (120), une boucle de tissu (132) entraînée autour d'un rouleau de formage (110), et une caisse de tête (101) configurée pour injecter une matière de départ (108) dans une structure sandwich en mouvement créée par les boucles de toile de formage et de tissu, l'appareil comprenant :
une turbine (140) couplée à un générateur (160) ;
une plaque de guidage (150, 150', 650, 750, 850, 1150, 1250) profilée pour diriger de l'eau éjectée à travers la toile de formage dans la turbine, la plaque de guidage se terminant en un bord terminal (152) à proximité de la turbine, **caractérisé par**
un actionneur (210) couplé à la plaque de guidage ; et
un pivot (220) couplé à la plaque de guidage,
l'actionneur et le pivot fonctionnels pour ajuster la plaque de guidage de telle sorte qu'un angle (418) entre :
une surface terminale d'alignement (153) pour définir et/ou diriger de l'eau éjectée dans la turbine comprenant le bord terminal (152) de la plaque de guidage ; et
une tangente (414) de la turbine au niveau d'un point (412) au niveau duquel une ligne d'extension de la surface terminale d'alignement (153) allant du bord terminal (152) à la turbine croise la turbine,
est compris entre environ 15 et 35 degrés.

2. Appareil selon la revendication 1, dans lequel une distance (1220) entre une partie la plus proche (1210) de la plaque de guidage et la turbine (140) est inférieure à 4 mm.

3. Appareil selon l'une ou l'autre des revendications 1 et 2, dans lequel l'angle (418) est compris entre 23 et 28 degrés, en particulier environ 24 et 27 degrés ; en particulier environ 25 et 26 degrés ; en particulier 24,5 et 25,5 degrés.

4. Appareil selon l'une quelconque des revendications 1 à 3, dans lequel une distance (410-420) entre : la ligne d'extension allant de la surface terminale d'alignement (153) au point (412) au niveau duquel la ligne d'extension croise la turbine (140) ; et la ligne la plus proche qui est parallèle à la ligne d'extension et tangente à une circonférence externe de la turbine,
ne dépasse pas 40 mm, y compris 30 mm, y compris 20 mm, y compris 15 mm.

5. Appareil selon l'une quelconque des revendications 1 à 4, dans lequel le pivot a un point de pivot (211) pour lequel une localisation du point de pivot (211) par rapport à un centre du rouleau guide (120) est comprise entre environ :
108 % et 260 % ;
en particulier 110 % et 230 % ;
en particulier 160 % et 224 % ;
en particulier 165 % et 214 % ;
d'un rayon du rouleau guide.

6. Appareil selon l'une quelconque des revendications 1 à 5, dans lequel le pivot a un point de pivot (211) pour lequel une localisation du point de pivot (211) par rapport à un centre du rouleau de formage (110) est comprise entre environ :
108 % et 200 % ;
en particulier 120 % et 160 % ;
en particulier 135 % et 145 % d'un rayon du rouleau de formage.

7. Appareil selon l'une quelconque des revendications 1 à 6, dans lequel l'actionneur comprend un actionneur à vis-mère ou vis sans fin ayant une force d'actionnement supérieure à 10 kN, en particulier supérieure à 20 kN, en particulier supérieure à 30 kN.

8. Appareil selon la revendication 7, dans lequel l'actionneur comprend une pluralité d'actionneurs ayant une force d'actionnement globale supérieure à 30 kN, en particulier supérieure à 40 kN, en particulier supérieure à 60 kN.

9. Appareil selon l'une quelconque des revendications 1 à 7, dans lequel le pivot inclut un pivot ajustable.

10. Appareil selon l'une quelconque des revendications 1 à 9, dans lequel au moins un de l'actionneur et du pivot est configurable pour positionner la plaque de guidage dans une position de dérivation, de telle sorte que la ligne d'extension s'étendant à partir de la surface terminale d'alignement (153) en direction de la turbine ne croise pas la turbine.

11. Appareil selon l'une quelconque des revendications 1 à 10, dans lequel :
la turbine est disposée au sein d'un module de turbine (250) ; et
la plaque de guidage, l'actionneur, et le pivot sont disposés au sein d'un module de plaque de guidage (210), le module de plaque de guidage formant une partie intégrée qui fixe la plaque de guidage, l'actionneur et le pivot les uns par rapport aux autres ;
le module de plaque de guidage séparable du module de turbine pour faciliter le retrait et le remplacement de la plaque de guidage sans changer la position du bord terminal ou l'angle de la plaque de guidage lorsque le module de plaque de guidage est remplacé.

12. Appareil selon l'une quelconque des revendications 1 à 11, dans lequel la turbine est montée en utilisant un ou plusieurs mécanismes de positionnement (310, 320, 320') fonctionnels pour positionner la turbine à des positions différentes, de préférence par rapport à au moins un du rouleau de formage et du rouleau guide.

13. Machine de fabrication de papier comprenant :
une boucle de toile de formage (130) configurée pour être entraînée autour d'un rouleau guide (120), une boucle de tissu (132) configurée pour être entraînée autour d'un rouleau de formage (110), et une caisse de tête (101) configurée pour injecter une matière de départ (108) dans une structure sandwich créée par les boucles de toile de formage et de tissu ; et
un appareil (200, 200', 200") selon l'une quelconque des revendications 1 à 12.

14. Procédé d'alignement d'un appareil de récupération d'énergie (200, 200', 200") dans une machine de fabrication de papier (100), le procédé comprenant :
la fourniture d'une machine de fabrication de papier (100) comprenant au moins un appareil selon l'une quelconque des revendications 1 à 13 ;
le fonctionnement de la machine de fabrication de papier ;
l'ajustement d'au moins une d'une position de la plaque de guidage et d'une position de la turbine ; et
la fixation d'au moins une de la plaque de guidage et de la turbine dans une position au niveau de laquelle un rendement d'énergie récupérée de la matière de départ par comparaison avec l'énergie communiquée à la matière de départ est un maximum.

15. Procédé selon la revendication 14, dans lequel au moins une de la plaque de guidage et de la turbine est positionnée par un actionneur commandé par ordinateur pouvant fonctionner au moyen d'un processeur, le processeur couplé à un support de stockage non transitoire lisible par ordinateur sur lequel se trouvent des instructions exécutables par le processeur pour positionner la plaque de guidage ou la turbine en utilisant un procédé itératif, à commande en boucle fermée, comprenant :
la détermination d'une position souhaitée d'au moins une de la plaque de guidage et de la turbine ; la réception des données de capteur provenant d'un capteur configuré pour capter une position réelle de la plaque de guidage ou de la turbine ;
le calcul d'une différence entre les positions souhaitée et réelle ; et
le fait de donner pour instruction à l'actionneur d'ajuster la plaque de guidage d'une manière telle qu'elle réduit la différence.
